# DEMANDE DE BREVET EUROPEEN

(11) **EP 3 663 174 A1**
(43) Date de publication de la demande: **10.06.2020**
(21) Numéro de dépôt: 19213755.2
(22) Date de dépôt: 05.12.2019
(51) Int. Cl.: B62D 35/00, B60K 11/08, H02P 7/00

(54) **SYSTÈME DE COMMANDE D'ÉLÉMENTS MOBILES DE VÉHICULES**

(30) Priorité: 06.12.2018 FR 1872409
(71) Demandeur: Compagnie Plastic Omnium, 69007 Lyon (FR)
(72) Inventeur: FRAPPA, Georges, 01150 SAINTE-JULIE (FR)
(74) Mandataire: LLR

(57) **Abrégé**

L'invention traite d'un système de commande d'éléments mobiles de véhicule automobile (1) qui comprend au moins un élément mobile piloté électroniquement (5, 6) entre au moins deux positions, au moins un motoréducteur à courant continu (7) relié à l'élément mobile (5, 6), un actionnement du motoréducteur à courant continu (7) induisant une mise en mouvement de l'élément mobile (5, 6) d'une des positions vers l'autre position. Le système comprend aussi une unité de commande électronique locale (10) pour le pilotage de l'élément mobile (5, 6). Le système de commande (1) étant dépourvu de capteur de positionnement de l'élément mobile (5, 6).

## Description

La présente invention concerne le domaine des véhicules automobiles et notamment les systèmes de commande d'éléments pilotés électroniquement au sein des véhicules automobiles. L'invention traite plus précisément de la commande d'éléments mobiles au sein des véhicules automobiles.

Avec l'avènement de l'informatique et des systèmes automatisés, les systèmes comprenant des éléments mobiles pilotés électroniquement sont aujourd'hui très répandus et utilisés dans l'industrie automobile. On peut par exemple citer les volets situés au niveau de la grille d'entrée d'air à l'avant du véhicule, mais également les hayons dont l'ouverture et la fermeture peuvent être pilotées électroniquement.

Il est connu des systèmes dans lesquels plusieurs actionneurs sont disposés, au sein d'un véhicule, afin de permettre l'actionnement des éléments pilotés électroniquement, par exemple, la mise en mouvement des éléments mobiles de ces systèmes. Dans le cas d'éléments mobiles mis en mouvement, ces derniers sont fixés à une structure, par exemple, un cadre dans le cas des volets d'entrée d'air. Tous ces actionneurs sont reliés à une même unité de commande électronique, elle-même présente dans le véhicule, qui centralise les données et gère les mises en mouvements des éléments mobiles des systèmes mentionnés.

Un des inconvénients de tels systèmes est la nécessité d'intégrer presque autant d'actionneurs qu'il y a d'éléments à piloter au sein de ces systèmes. Or, les actionneurs sont des dispositifs peu flexibles, qui ne permettent pas une intégration aisée au sein de l'environnement du véhicule dans lequel ils doivent être disposés. En effet, ces actionneurs sont généralement au plus proche des éléments qu'ils actionnent et nécessitent parfois d'être fixés à la structure qui porte les éléments à piloter.

Une telle disposition des actionneurs a également pour inconvénient, la présence de multiples connexions, généralement des fils électriques, qui relient chaque actionneur à l'unité de commande électronique. Ces connexions ne peuvent pas toujours être dissimulées et peuvent, dès lors, s'avérer gênantes, par exemple, lors de l'intégration ultérieure de systèmes additionnels ou lors de de l'assemblage du véhicule.

De plus, les actionneurs sont des dispositifs généralement standardisés. Ils ne permettent, dès lors, pas un régime de sortie le plus adapté aux propriétés mécaniques de l'élément mobile piloté auquel il est associé. Par conséquent, l'actionnement de ces éléments pilotés n'est pas toujours optimisé.

De plus, le nombre important d'actionneurs nécessaires pour le fonctionnement de ces systèmes monopolise autant de lignes de connexion de l'unité de commande électronique qu'il y a d'actionneur. Or, les unités électroniques possèdent un nombre limité de lignes de connexion, qui sont généralement toutes requises pour assurer les nombreuses autres fonctions présentes (i.e. radar, phares, etc.) au sein d'une même zone du véhicule.

Enfin, les systèmes de commande d'éléments mobiles sont généralement pourvus de capteurs de position, montés directement sur le circuit imprimé, afin de permettre l'arrêt de l'élément mobile, lorsque celui-ci atteint la position recherchée. Or de tels capteurs de position sont des dispositifs onéreux et leur implémentation au sein du système est complexe.

Autrement dit, il est très compliqué pour les systèmes actuels de permettre une intégration optimale au sein de l'environnement du véhicule, tout en permettant une optimisation de fonctionnement et un prix de conception attractif.

L'invention a pour but de remédier à ces inconvénients en fournissant un système de commande d'éléments mobiles de véhicule automobile comprenant :
- au moins un élément mobile piloté électroniquement, l'élément mobile étant apte à prendre au moins deux positions prédéterminées,
- au moins un motoréducteur à courant continu relié à l'élément mobile, un actionnement du motoréducteur à courant continu induisant une mise en mouvement de l'élément mobile d'une des positions prédéterminées vers l'autre position prédéterminée,
- une unité de commande électronique locale pour le pilotage de l'élément mobile, l'unité de commande électronique locale comprenant un circuit imprimé, un connecteur électrique relié au circuit imprimé, le connecteur électrique étant apte à être relié à une unité de commande électronique centrale du véhicule, et au moins une connexion électrique permettant de relier l'unité de commande électronique locale et le motoréducteur à courant continu, l'unité de commande électronique locale étant apte à actionner le motoréducteur à courant continu et à comptabiliser le nombre d'impulsions du motoréducteur à courant continu en cours d'actionnement, le système de commande étant dépourvu de capteur de positionnement de l'élément mobile.

Ainsi avec le système selon l'invention, il est possible de de fournir un système de commande complet, moins encombrant et à moindre coût par rapport aux systèmes existants. Plus précisément, le système de l'invention permet la suppression d'un capteur de position pour déterminer la position de l'élément mobile dont le mouvement est requis, tout en garantissant des performances satisfaisantes du système. La suppression du capteur de position participe également à rendre le système moins encombrement et donc plus facilement positionnable au sein de l'environnement généralement étroit du véhicule. Une telle suppression implique aussi l'absence de référencement du capteur au niveau de l'électronique du véhicule, lors de l'installation du système, ce qui facilite le fonctionnement de cette dernière et permet de libérer des lignes de connexion de l'unité de commande électronique locale.

De plus, le pilotage de la mise en mouvement de l'élément mobile, via l'actionnement du motoréducteur à courant continu et la comptabilisation d'un nombre d'impulsions, pouvant être fonction des ondulations et/ou des pics du courant électrique du motoréducteur détectés, est simplifié grâce à la présence locale de l'unité de commande électronique locale. En effet, ce positionnement plus proche de l'élément mobile à piloter permet de simplifier le raccordement électrique entre l'élément mobile et l'unité de commande électronique locale. Un tel constat est d'autant plus vrai lorsque le nombre d'éléments à piloter (mobiles et immobiles) augmente. En effet, ce positionnement de l'unité de commande électronique locale permet de mutualiser l'électronique nécessaire au pilotage de plusieurs éléments mobiles et immobiles (tels que des dispositifs lumineux), tous ces éléments étant situés à proximité de l'unité de commande locale.

Avantageusement, l'élément mobile est un organe aérodynamique, par exemple un volet mobile ou un aileron aérodynamique mobile.

Ainsi, il est possible de piloter avec une plus grande précision l'élément aérodynamique pour le déplacer vers la position prédéterminée, qui correspond généralement à la position dans laquelle l'élément participe à l'amélioration des performances aérodynamiques du véhicule en cours de roulage.

Avantageusement, le système comprend plusieurs éléments mobiles pilotés électroniquement (potentiellement simultanément) par l'unité de commande électronique locale, chaque élément mobile étant relié à un motoréducteur à courant continu différent, l'unité de commande électronique locale étant apte à actionner chaque motoréducteur à courant continu et à comptabiliser le nombre d'impulsions de chaque motoréducteur à courant continu en cours d'actionnement.

Ainsi, grâce à la présence de l'unité de commande électronique locale, il est possible de piloter électroniquement et indépendamment plusieurs éléments mobiles en actionnant de manière indépendante chacun des motoréducteurs à courant continu.

L'invention a aussi pour objet un ensemble d'une pièce de carrosserie de véhicule automobile et d'un système de commande selon des modes réalisations précédemment décrits.

Avantageusement, la pièce de carrosserie est choisie parmi la liste constituée de : un panneau de carrosserie extérieur, un pare-chocs, un ouvrant, une face avant technique.

L'invention a aussi pour objet un procédé de commande d'éléments mobiles d'un véhicule automobile, le procédé comprenant les étapes suivantes :
- alimentation électrique d'au moins un motoréducteur à courant continu relié à un élément mobile,
- détection des ondulations et/ou des pics du courant électrique du motoréducteur à courant continu durant toute l'étape d'alimentation électrique et comptabilisation d'un nombre d'impulsions fonction des ondulations détectées et/ou des pics détectés,
- arrêt de l'alimentation électrique du motoréducteur à courant continu, lorsque le nombre d'impulsions comptabilisées atteint un nombre d'impulsions seuil prédéterminé.

Ainsi, il est possible de proposer un procédé de commande qui ne dépend pas de données directes relatives au positionnement de l'élément mobile obtenues par un capteur de positionnement. Le système de commande permettant la mise en œuvre du procédé est donc moins encombrant et plus facile à implémenter au sein du véhicule. En effet, l'unité de commande locale du système de commande est capable à la fois de commander l'actionnement de l'élément mobile, en initiant l'alimentation électrique du motoréducteur à courant continu associé, et de détecter les ondulations et/ou pics de courant électrique du motoréducteur. Ces données détectées sont par la suite traitées électroniquement par l'unité de commande locale afin de traduire les ondulations et/ou pics de courant électrique en impulsions selon un modèle donné. Chaque impulsion comptabilisée traduit, *in fine*, un déplacement de l'élément mobile. Par exemple lorsque l'élément mobile est un volet aérodynamique, mobile en rotation autour de son axe longitudinal, un impulsion comptabilisée représente un déplacement angulaire donné du volet aérodynamique. Ainsi, le nombre d'impulsions comptabilisées atteint un nombre d'impulsions seuil, cela signifie qu'il n'est plus nécessaire de déplacer l'élément mobile qui a donc atteint la position recherchée avant son déplacement.

Avantageusement, plusieurs nombres d'impulsions seuils sont prédéterminés, un nombre d'impulsions seuil étant associé à une position distincte de l'élément mobile.

Ainsi, il possible d'atteindre des positions intermédiaires entre deux positions extrêmes de déplacement de l'élément mobile. Par conséquent, le procédé selon cette variante offre plus de flexibilité de déplacement de l'élément mobile et, par conséquent, une meilleure adaptation à l'environnement du véhicule, ainsi qu'une optimisation de la fonction de l'élément mobile. En d'autres termes et dans le cas où l'élément mobile est un volet aérodynamique, ce dernier peut adopter des positions intermédiaires entre la position de fermeture et la position d'ouverture, ces positions intermédiaires pouvant chacune correspondre à une position aérodynamique optimale en fonction des conditions de roulage du véhicule.

Avantageusement, l'élément mobile est un organe aérodynamique, par exemple un volet mobile ou un aileron aérodynamique mobile.

L'invention a aussi pour objet une utilisation d'un système de commande d'éléments mobiles de véhicule automobile ou d'un ensemble selon l'un des modes de réalisation précédemment décrits pour la mise en œuvre d'un procédé de commande d'éléments mobiles d'un véhicule automobile selon l'un des modes de réalisation précédemment décrits.

### Brève description des figures

L'invention sera mieux comprise à la lecture des figures annexées, qui sont fournies à titre d'exemples et ne présentent aucun caractère limitatif, dans lesquelles :
[fig.1] est une vue en perspective d'une face avant de véhicule intégrant un système de carrosserie actif selon un premier mode de réalisation de l'invention,
[fig.2] est une vue éclatée en perspective de la face avant illustrée à la figure 1,
[fig.3] est un graphique correspondant à des données détectées par l'unité de commande électronique locale.

### Description détaillée

Le système de commande d'éléments mobiles de véhicule automobile 1 selon un mode de réalisation de l'invention comprend au moins un élément mobile un élément mobile piloté électroniquement 5 et 6 et qui est apte à prendre au moins deux positions prédéterminées. Le système 1 comprend également au moins un motoréducteur à courant continu 7 relié à l'élément mobile 5 et 6, un actionnement du motoréducteur à courant continu 7 induisant une mise en mouvement de l'élément mobile 5 et 6 d'une des positions prédéterminées vers l'autre position prédéterminée. Le système 1 comprend également une unité de commande électronique locale 10 pour le pilotage de l'élément mobile 5 et 6, l'unité de commande électronique locale 10 comprenant un circuit imprimé (non représenté), un connecteur électrique (non représenté) relié au circuit imprimé, le connecteur électrique étant apte à être relié à une unité de commande électronique centrale du véhicule (non représentée), et au moins une connexion électrique 8 permettant de relier l'unité de commande électronique locale 10 et le motoréducteur à courant continu 7. L'unité de commande électronique locale 10 est apte à actionner le motoréducteur à courant continu 7 et à comptabiliser le nombre d'impulsions du motoréducteur à courant continu 7 en cours d'actionnement. Un tel système 1 est dépourvu de capteur de positionnement de l'élément mobile 5 et 6.

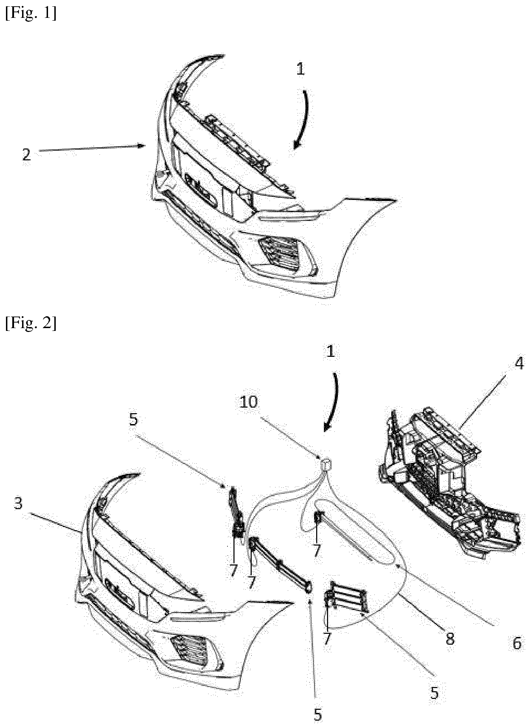

Dans le mode de réalisation présenté, la pièce de carrosserie 2 est une pièce de carrosserie 2 pourvue d'éléments mobiles 5 et 6 pilotés électroniquement d'une des positions prédéterminées vers une autre position prédéterminée. Ces éléments mobiles 5 et 6 sont illustrés aux figures 1 et 2 comme des volets aérodynamiques mobiles 5 et un aileron aérodynamique 6. Dans le mode de réalisation représenté aux figures 1 et 2, la pièce de carrosserie 2 est une face avant comprenant une peau extérieure 3 destinée à habiller une partie structurelle 4. Sur cette dernière sont positionnés des volets aérodynamiques 5 et un aileron aérodynamique 6 (figures 1 et 2), ainsi que l'unité de commande locale 10 permettant d'actionner de manière indépendante le motoréducteur à courant continu 7 de chacun des volets aérodynamiques 5 et de l'aileron aérodynamique 6 et de comptabiliser indépendamment le nombre d'impulsions de chaque motoréducteur à courant continu 7 en cours d'actionnement.

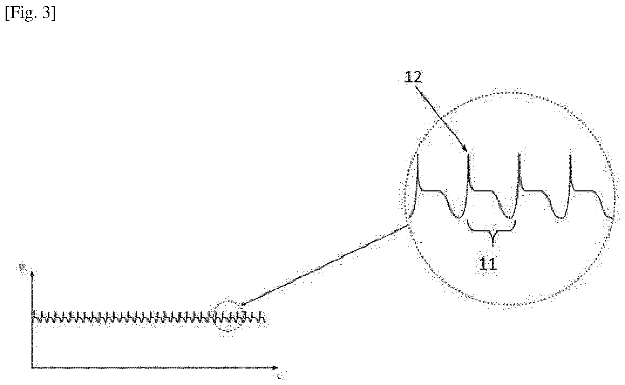

L'unité de commande locale 10 est capable de comptabiliser le nombre d'impulsions de chaque motoréducteur 7 en cours d'actionnement et d'en déduire ainsi la position de l'élément mobile associé au motoréducteur 7. Comme représenté à la figure 3, ce nombre d'impulsions est fonction d'un nombre d'ondulations 11 détectées et/ou d'un nombre de pics 12 détectés et sont obtenues après traitement électronique par l'unité de commande locale 10 selon un modèle préétabli.

La fréquences des ondulations 11 et/ou des pics 12 est dépendante de la nature du motoréducteur, par exemple de sa conception, de son nombre de pôles, *etc* et également d'autres facteurs tels que la vitesse de rotation du motoréducteur. Par conséquent, le nombre d'impulsions obtenues après de traitement électronique par l'unité de commande locale 10 dépend aussi des ces facteurs. La relation entre le nombre d'impulsions comptabilisées pour un motoréducteur 7 et la position relative de l'élément mobile 5 ou 6 dont le mouvement est induis par ledit motoréducteur 7 est une donnée prédéterminée, connue et stockée au sein de l'unité de commande locale 10.

### Liste des références

1 : système de commande d'éléments mobiles
2 : pièce de carrosserie
3 : peau extérieure
4 : partie structurelle
5 : volets aérodynamique
6 : aileron aérodynamique
7 : motoréducteur à courant continu
8 : connexion électrique
10 : unité de commande électronique locale
11 : ondulation de courant électrique
12 : pic de courant électrique

## Revendications

1. Système de commande d'éléments mobiles de véhicule automobile (1) **caractérisé en ce qu'**il comprend :
- au moins un élément mobile piloté électroniquement (5, 6), l'élément mobile (5, 6) étant apte à prendre au moins deux positions prédéterminées,
- au moins un motoréducteur à courant continu (7) relié à l'élément mobile (5, 6), un actionnement du motoréducteur à courant continu (7) induisant une mise en mouvement de l'élément mobile (5, 6) d'une des positions prédéterminées vers l'autre position prédéterminée,
- une unité de commande électronique locale (10) pour le pilotage de l'élément mobile (5, 6), l'unité de commande électronique locale (10) comprenant un circuit imprimé, un connecteur électrique relié au circuit imprimé, le connecteur électrique étant apte à être relié à une unité de commande électronique centrale du véhicule, et au moins une connexion électrique (8) permettant de relier l'unité de commande électronique locale (10) et le motoréducteur à courant continu (7),
l'unité de commande électronique locale (10) étant apte à actionner le motoréducteur à courant continu (7) et à comptabiliser le nombre d'impulsions du motoréducteur à courant continu (7) en cours d'actionnement,
le système de commande (1) étant dépourvu de capteur de positionnement de l'élément mobile (5, 6).

2. Système de commande (1) selon la revendication précédente, dans lequel l'élément mobile (5, 6) est un organe aérodynamique, par exemple un volet mobile (5) ou un aileron aérodynamique mobile (6).

3. Système de commande (1) selon la revendication 1 ou 2, comprenant plusieurs éléments mobiles (5) pilotés électroniquement par l'unité de commande électronique locale (10), chaque élément mobile (5) étant relié à un motoréducteur à courant continu (7) différent, l'unité de commande électronique locale (10) étant apte à actionner chaque motoréducteur à courant continu (7) et à comptabiliser le nombre d'impulsions de chaque motoréducteur à courant continu (7) en cours d'actionnement.

4. Ensemble d'une pièce de carrosserie de véhicule automobile (2) et d'un système de commande (1) selon l'une des revendications précédentes, dans lequel l'élément mobile (5, 6) ou au moins l'un des éléments mobiles (5, 6) étant intégré au sein de la pièce de carrosserie (2).

5. Ensemble selon la revendication précédente, dans lequel la pièce de carrosserie (2) est choisie parmi la liste constituée de : un panneau de carrosserie extérieur, un pare-chocs, un ouvrant, une face avant technique.

6. Procédé de commande d'éléments mobiles (5, 6) d'un véhicule automobile, **caractérisé en ce que** le système (1) comprend les étapes suivantes :
- alimentation électrique d'au moins un motoréducteur à courant continu (7) relié à un élément mobile (5, 6),
- détection des ondulations (11) et/ou des pics (12) du courant électrique du motoréducteur à courant continu (7) durant toute l'étape d'alimentation électrique et comptabilisation d'un nombre d'impulsions fonction des ondulations (11) détectées et/ou des pics (12) détectés,
- arrêt de l'alimentation électrique du motoréducteur à courant continu (7), lorsque le nombre d'impulsions comptabilisées atteint un nombre d'impulsions seuil prédéterminé.

7. Procédé selon la revendication précédente, dans lequel plusieurs nombres d'impulsions seuils sont prédéterminés, un nombre d'impulsions seuil étant associé à une position distincte de l'élément mobile (5, 6).

8. Procédé selon l'une des revendications 6 ou 7, dans lequel l'élément mobile (5, 6) est un organe aérodynamique, par exemple un volet mobile (5) ou un aileron aérodynamique mobile (6).

9. Utilisation d'un système de commande d'éléments mobiles de véhicule automobile (1) selon l'une quelconque des revendications 1 à 3 ou d'un ensemble selon la revendication 4 ou 5 pour la mise en œuvre d'un procédé de commande d'éléments mobiles (5, 6) d'un véhicule automobile selon l'une quelconque des revendications 6 à 8.
